# EUROPEAN PATENT SPECIFICATION

(11) **EP 0 397 527 B1**
(45) Date of publication and mention of the grant of the patent: **26.11.1997**
(21) Application number: 90305122.5
(22) Date of filing: 11.05.1990
(51) Int. Cl.: G01S 13/22

(54) **Stagger compensated moving target detector**
Kompensierter Detektor für bewegte Ziele mit veränderlicher Wiederholungsfrequenz
Détecteur compensé de cibles mobiles à période de répétition variable

(30) Priority: 12.05.1989 US 351004
(43) Date of publication of application: 14.11.1990
(73) Proprietor: RAYTHEON COMPANY, Lexington Massachusetts 02173 (US)
(72) Inventor: Ward, Harold R., Bedford, Massachusetts (US)
(74) Representative: Jackson, David Spence

(56) References cited:
- EP-A- 0 128 542
- EP-A- 0 141 583
- EP-A- 0 153 130
- WO-A-86/01001
- WO-A-88/02493
- US-A- 3 706 990
- US-A- 4 137 532

## Description

This invention relates to a moving target indication radar system comprising: means for transmitting pulses with staggered pulse repetition frequency (PRF); means for receiving return signals from said transmitted pulses; and a moving target detector having: filter means coupled to said receiving means for filtering quadrature samples of said received return signals of sequences of said transmitted pulses in accordance with weighting coefficients; means for storing weighting coefficients and supplying the weighting coefficients to the filter means; and means coupled to said storing means and said transmitting means for synchronizing the supplying of weighting coefficients for said filter means with said transmitted pulses in accordance with the pulse repetition frequency.

The invention also relates to a method of operating a moving target indication radar system having a moving target detector.

US-A-4137532 describes a variable interpulse period Doppler filter bank signal processor for a moving target indication radar system of the kind defined hereinbefore at the beginning in which the weighting coefficients are pre-computed and are stored in a read only memory that is addressed, during operation, by a variable interpulse period sequencer driven by a time interval counter.

As is known in the art, when a staggered pulse repetition frequency (PRF) is used in a pulse-radar system, a voltage variation is induced in the transmitter power supply. Such a voltage variation modulates the amplitude and phase of the RF pulses. The filters of a moving target detector (MTD) in the radar system are designed to cancel clutter returns that do not contain this staggered modulation; hence, a limitation on clutter attenuation occurs as a result of such staggered induced modulation on the RF pulses.

Radar systems in the prior art have attempted to deal with the staggered modulation problem by increasing the size of the filter in the transmitter power supply or by discarding power to maintain a constant power supply load which can amount to approximately 20% lost power.

EP-A-0 153 130 describes a Doppler pulse radar system having a moving target indicator in which stationary clutter is removed from I and Q components of the received radar signals by two conventional MTI clutter filters whose outputs are corrected in respective corrector circuits so that two further MTI clutter filters can remove the remaining clutter from moving clutter sources. The corrector circuits produce respective signals from which the variation in amplitude and phase of the moving clutter components in the outputs from the stationary clutter cancelling MTI has been removed. The corrector circuits operate in response to correcting data generated on the basis of an assumed value of the average Doppler phase-shift of the moving clutter.

WO 88/02493 describes a moving target indicator radar system in which small pulse-to-pulse imperfections, due for example to the use of a magnetron as the source of the radar pulses, are corrected by a filter coefficient calculation circuit that computes a separate filter coefficient for each pulse repetition interval by deriving a plurality of filter coefficients each of which is equal to twice the kth sample of an average transmitter pulse sample less the kth sample of the transmitter pulse sample from an nth pulse repetition interval. These filter coefficients are used as the coefficients for a plurality of finite impulse response filters which act as a set of equalisers on stored traces having samples of the received radar signal.

According to one aspect of the present invention, a radar system of the kind defined hereinbefore at the beginning is characterised by means operable in a test mode of the system for calculating in accordance with the formula Wᵢ=Dᵢ^{x} (T₁/Tᵢ), where Dᵢ are uncorrected complex filter coefficients, T₁ is the first complex transmitter output pulse sample in a group of pulses to which the coefficients Dᵢ apply, and Tᵢ is the i^{th} complex transmitter output pulse sample in the group, weighting coefficients (Wᵢ) corrected for pulse stagger amplitude and phase errors on said transmitted pulses and supplying the corrected weighting coefficients (Wᵢ) to the storing means for storage therein, and mode control means for determining whether the system is in the test mode or an operate mode, the mode control means including means for sampling said transmitted pulses and coupling said sampled transmitted pulses to the receiving means when the radar system is in the test mode; and
means being provided for supplying a quadrature output from the receiving means to the calculating means, the calculating means being such as to calculate said corrected weighting coefficients based on quadrature samples of the sampled transmitted pulses and uncorrected weighting coefficient inputs (Dᵢ) to the calculating means in the test mode. The transmitted pulses may comprise either or two types of staggered PRF, block stagger and pulse stagger. The block stagger transmitted pulses comprise a plurality of stagger blocks wherein the interpulse periods are equal within each of the blocks of the transmitted pulses and the interpulse period may be the same or vary for each of the blocks. The pulse stagger transmitted pulses comprise a varying interpulse period from pulse to pulse.

According to another aspect of the present invention, there is provided a method of operating a moving target indication radar system having a moving target detector, comprising the steps of:
storing in said moving target detector weighting coefficients;
transmitting pulses with staggered pulse repetition frequency (PRF);
receiving return signals from said transmitted pulses;
filtering quadrature samples of said received return signals of sequences of said transmitted pulses in accordance with said stored weighting coefficients; and
synchronizing the application of said weighting coefficients for filtering the quadrature samples in accordance with the pulse repetition frequency (PRF) of the corresponding transmitted pulses, characterised by the step of determining during a test mode of the radar system weighting coefficients (Wᵢ) corrected for pulse stagger amplitude and phase errors on said transmitted pulses, the corrected weighting coefficients (Wᵢ) being calculated in accordance with the formula Wᵢ=Dᵢ^{x} (T₁/Tᵢ), where Dᵢ are uncorrected complex filter coefficients, T₁ is the first complex transmitter output pulse sample in a group of pulses to which the coefficients Dᵢ apply, and Tᵢ is the i^{th} complex transmitter output pulse sample in the group, and in that the said storing of weighting coefficients comprises storing the corrected weighting coefficients (Wᵢ), said step of determining the corrected weighting coefficients (Wᵢ) comprising the steps of:
switching to a test mode;
sampling said transmitted pulses and coupling said sampled transmitted pulses to receiving means when said radar system is in said test mode; and
calculating corrected weighting coefficients based on quadrature samples from said receiving means of said sampled transmitted pulses and uncorrected coefficient inputs (D₁) when said radar system is in said test mode. The method preferably comprises the step of transmitting pulses comprising a plurality of stagger blocks wherein the interpulse periods are equal within each of the blocks of the transmitted pulses, and the interpulse period may be the same or vary for each one of the blocks, or alternatively the step of transmitting pulses having a varying interpulse period from pulse to pulse.

### Brief Description of the Drawings

Other and further features and advantages of the invention will become apparent in connection with the accompanying drawings wherein:
FIG. 1 is a block diagram of a radar system having staggered compensation in the moving target detector in accordance with the present invention;
FIG. 2 is a functional block diagram of an FIR filter showing the Wᵢ inputs for the filter weighting coefficients;
FIG. 3 shows an example of the relative timing of transmitter and receiver radar signals for block stagger for a four pulse FIR in pulse-radar systems; and
FIG. 4 shows an example of the relative timing of transmitter and receiver radar signals for pulse stagger and a four pulse FIR in pulse-radar systems.

### Description of the Preferred Embodiment

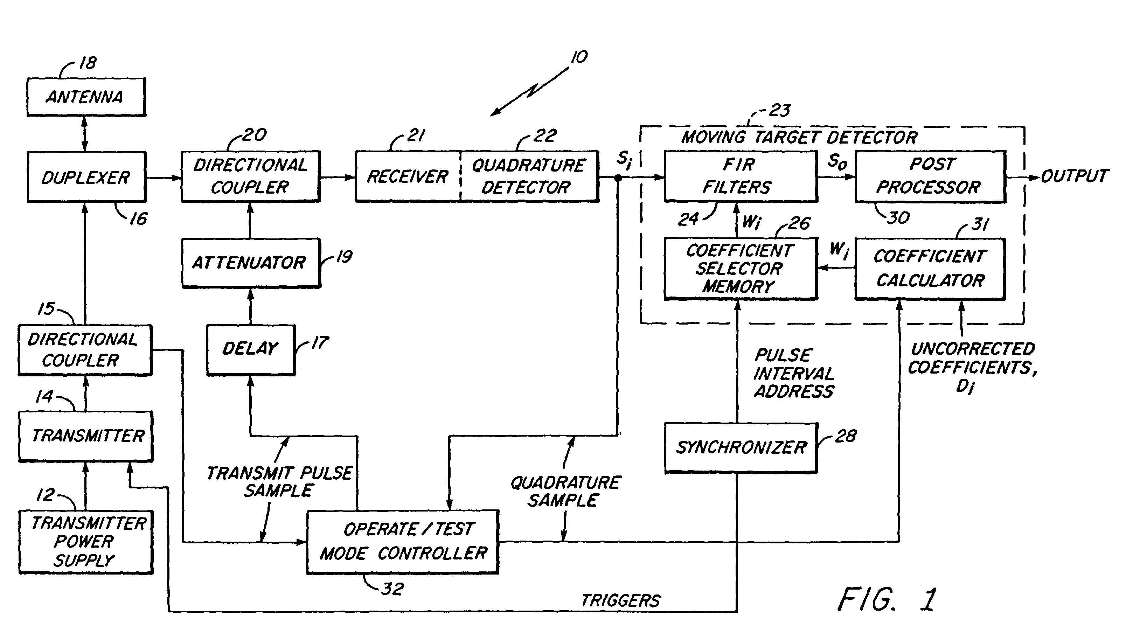

Referring to FIG. 1 there is shown a block diagram of a pulse-radar system 10 having staggered compensation in a moving target detector 23 in accordance with the present invention. A transmitter 14 generates a staggered pulse sequence in accordance with trigger pulses from a synchronizer 28. Transmitter power supply 12 provides power to the transmitter 14. The transmitter output is coupled via a directional coupler 15 to a duplexer 16 which provides the transmitted pulses to an antenna 18. Return signals are picked up by the antenna 18 and coupled to a receiver 21 via duplexer 16 coupled to a directional coupler 20. The received return signals are amplified and passed on to a quadrature detector 22 comprising phase detectors and analog-to-digital converters known to one skilled in the art for collecting quadrature data samples of the received return signals. The quadrature data samples are coupled to the moving target detector (MTD) 23 comprising finite impulse response (FIR) filters 24 coupled to a post processor 30 which is required for further radar signal processing. The error due to power supply 12 modulation on the received signals being processed by the FIR filters 24 is compensated by corrected weighting coefficients stored in a digital coefficient selector memory 26, the output of which is coupled to the FIR filters 24. The selection of the corrected weighting coefficients in the digital memory 26 is determined by a pulse interval address generated by synchronizer 28 which generates the transmitter trigger signals. The MTD 23 also comprises a coefficient calculator which is coupled to the coefficient selector memory 26. When the radar system 10 is switched from an operate mode to a test mode by an operate/test mode controller 32, the coefficient calculator determines corrected weighting coefficients (Wᵢ) based on samples of transmitted signals and uncorrected filter coefficients (Dᵢ), and the calculated corrected weighting coefficients are stored in the coefficient selector memory 26.

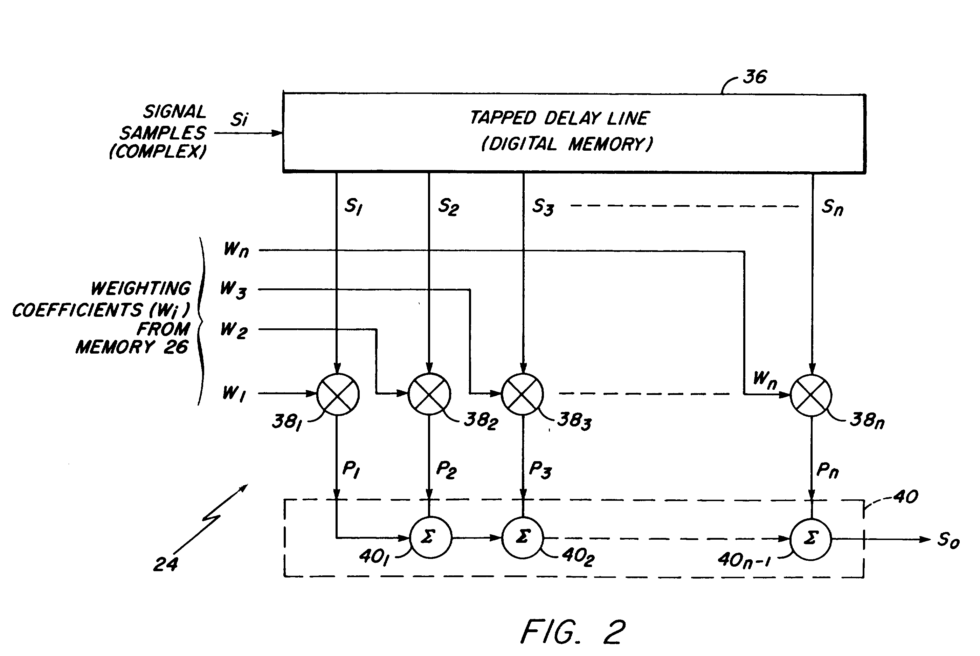

Referring to FIG. 2, a functional representation of each of the FIR filters 24 is shown. All of the complex signal samples (Sᵢ) which are the radar returns from a number of transmitted pulses, n, are stored in a digital memory for processing after all of the return signals have been received; this memory is represented functionally by a tapped delay line 36. Selected return signal samples (those from the same target range) are retrieved from memory (delay line 36) and multiplied by a corresponding corrected weighting coefficient (Wᵢ) in multipliers 38ₗ to 38ₙ. These weighting coefficients have been stored in the digital coefficient selector memory 26, and a particular set of coefficients is selected by a pulse interval address provided by synchronizer 28 for the interpulse periods that were used when collecting the signal samples. The complex outputs (Pₗ to Pₙ) from the multipliers 38ₗ to 38ₙ are added together by a plurality of summers 40ₗ to 40ₙ₋ₗ to produce the complex filter output, Sₒ.

The complex multiplier is represented mathematically as follows:

If the received signals, S = Sx + jSy and
the filter weight, W = Wx + jWy
then, S * W = (Sx + jSy) * (Wx + jWy)
S * W = (SxWx - SyWy) + j(SxWy + SyWx)
Hence, a single complex multiply requires four numbers as inputs to each of the multipliers 38ₗ to 38ₙ and two numbers are generated at the outputs Pₗ to Pₙ. The complex filter output, Sₒ, may be expressed as follows:

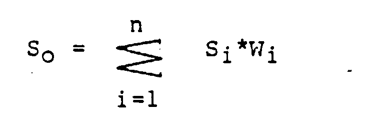

Referring to FIG. 1, the uncorrected filter coefficients (Dᵢ) used for a particular group of pulses are corrected by the coefficient calculator 31 to compensate for the small amplitude and phase errors on the transmitted signal resulting from the staggered PRF using the following formula:${\text{W}}_{\text{i}} {\text{= D}}_{\text{i}} {\text{*(T}}_{\text{l}} {\text{/T}}_{\text{i}} \text{)}$ where Dᵢ are the uncorrected complex filter coefficients, Tₗ is is the first complex transmitter output pulse sample in the group, Tᵢ is the i th complex transmitter pulse sample in the group and Wᵢ are the compensated or corrected filter weights. These transmitter output pulses are measured periodically (depending on the system application and the method of staggered PRF) by the operate/test mode controller 32 switching the radar system 10 to the test mode of operation and they are used to compute the new corrected weighting coefficients, (Wᵢ), which are stored in memory 26 for use in the normal operate mode of the radar.

An example showing a particular set of numerical values for the uncorrected weights, transmitter samples, and corrected weights is shown in Table 1. The values are chosen arbitrarily to illustrate the process. When any uncorrected weighting coefficient (Wᵢ) is multiplied by its corresponding transmitter sample (Sᵢ) the result is equal to Sₗ, thus proving that the weighting coefficients remove the signal distortion injected by the tranmitter.

**Table 1**

| | | |
|---|---|---|
| Uncorrected filter coefficient weights: | Dx1 = 1.00 | Dy1 = 0.00 |
| | Dx2 = 1.00 | Dy2 = 0.00 |
| | Dx3 = 1.00 | Dy3 = 0.00 |
| | Dx4 = 1.00 | Dy4 = 0.00 |
| Transmitter samples: | Tx1 = 1.01 | Ty1 = 0.10 |
| | Tx2 = 1.00 | Ty2 = 0.00 |
| | Tx3 = 0.98 | Ty3 = 0.10 |
| | Tx4 = 0.90 | Ty4 = 0.20 |
| Corrected filter coefficient weights: | Wx1 = 1.00 | Wy1 = 0.00 |
| | Wx2 = 1.01 | Wy2 = 0.10 |
| | Wx3 = 1.03 | Wy3 = -0.003 |
| | Wx4 = 1.09 | Wy4 = -0.13 |

Referring again to FIG. 1, the radar system 10 is placed in a test mode by the operate/test mode controller 32, to measure the transmitter output samples (T₁ to Tᵢ) for each transmitted pulse, and these measurements are used to compute the corrected filter weights (Wᵢ) in the coefficient calculator 31 which are (as described above) used by the FIR filters 24 in the normal operate mode. In the test mode a sample of the transmit pulse is coupled from the output of transmitter 14 via the operate/test mode controlled to a time delay 17 and attenuator 19 and then coupled to the receiver 21 input via directional coupler 20. The transmitter samples are amplified and quadrature detected in receiver 21 and quadrature detector 22 which is the same apparatus used in the radar system operate mode. When in the test mode, the quadrature detector 22 output is switched to the coefficient calculator 31 by the operate/test mode controller 32 for calculating the new corrected filter coefficient weights (Wᵢ).

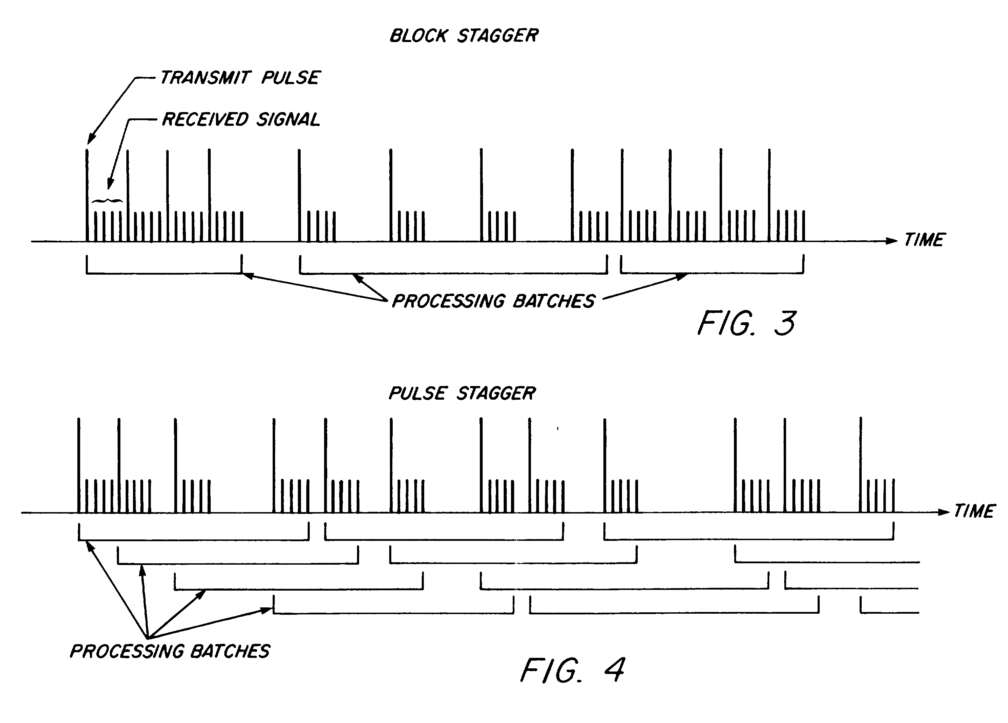

Referring now to FIG. 3 and FIG. 4, there are two methods illustrated for accomplishing the stagger compensated MTD. PRF stagger may be applied either as block stagger as shown in FIG. 3 or pulse stagger as shown in FIG. 4. In the block stagger method a block of pulses are transmitted with equal interpulse intervals. The signals received from this block of transmissions are stored and processed as a single batch. The interpulse spacing varies from block to block but the processing remains the same with the exception of the corrections placed on the filter weights. Each processing batch uses its own set of corrected weights for processing the signals in that batch. These corrected weights will cancel the transmitter modulation induced on the transmitter output by the power supply's response to the particular interpulse periods used.

The second method referred to as pulse stagger employs pulse-to-pulse stagger. Here the interval between pulses is not held fixed as it was in block stagger but rather the interpulse interval varies from pulse to pulse. Four contiguous pulses comprise a processing batch as shown in the example of FIG. 4. After the next pulse is transmitted and its signal returns are received and stored, another processing batch is initiated. This new batch combines the returns from the last four transmitted pulses, and since the pulses have different relative positions in time, that processing batch requires a different set of corrected weights from the preceding batch. Therefore, in the pulse stagger method a new set of corrected filter weights is obtained from the digital coefficient selector memory 26 at the start of each processing batch.

This concludes the description of the preferred embodiment. However, many modifications and alterations will be obvious to one of ordinary skill in the art without departing from the spirit and scope of the inventive concept. Therefore, it is intended that the scope of this invention be limited only by the appended claims.

## Claims

1. A moving target indication radar system comprising:
means (12,14,28) for transmitting pulses with staggered pulse repetition frequency (PRF);
means (21) for receiving return signals from said transmitted pulses; and
a moving target detector (23) having:
filter means (24) coupled to said receiving means (21) for filtering quadrature samples of said received return signals of sequences of said transmitted pulses in accordance with weighting coefficients;
means (26) for storing (23) weighting coefficients and supplying the weighting coefficients to the filter means (24);
and means (28) coupled to said storing means (26) and said transmitting means (12,14) for synchronizing the supplying of weighting coefficients for said filter means (24) with said transmitted pulses in accordance with the pulse repetition frequency, characterised by means (31) operable in a test mode of the system for calculating in accordance with the formula Wᵢ=Dᵢ^{x} (T₁/Tᵢ), where Dᵢ are uncorrected complex filter coefficients, T₁ is the first complex transmitter output pulse sample in a group of pulses to which the coefficients Dᵢ apply, and Tᵢ is the i^{th} complex transmitter output pulse sample in the group, weighting coefficients (Wᵢ) corrected for pulse stagger amplitude and phase errors on said transmitted pulses and supplying the corrected weighting coefficients (Wᵢ) to the storing means (26) for storage therein, and mode control means (32) for determining whether the system is in the test mode or an operate mode, the mode control means (32) including means (15,17,19,20) for sampling said transmitted pulses and coupling said sampled transmitted pulses to the receiving means (21) when the radar system is in the test mode; and
means (22) being provided for supplying a quadrature output from the receiving means (21) to the calculating means (31), the calculating means (31) being such as to calculate said corrected weighting coefficients based on quadrature samples of the sampled transmitted pulses and uncorrected weighting coefficient inputs (Dᵢ) to the calculating means (31) in the test mode.

2. A radar system according to claim 1, characterised in that the mode control means (32) comprises:
means (15) arranged to couple said pulses from said transmitting means (12,14) to delay and attenuator means (17,19) when set to said test mode, the delay and attenuator means (17,19) then supplying to the receiving means (21) signals having characteristics of said return signals.

3. A radar system according to claim 1 or 2,
characterised in that said transmitting means (12,14,28) is such as to transmit a plurality of stagger blocks wherein said interpulse periods are equal within each of said blocks of said transmitted pulses and said interpulse period may be the same or vary for each of said blocks.

4. A radar system according to claim 1 or 2,
characterised in that said transmitting means (12,14,28) is such as to transmit pulses with staggered PRF having a varying interpulse period from pulse to pulse.

5. A method of operating a moving target indication radar system having a moving target detector, comprising the steps of:
storing (26) in said moving target detector (23) weighting coefficients;
transmitting (12,14,28) pulses with staggered pulse repetition frequency (PRF);
receiving (21) return signals from said transmitted pulses;
filtering (24) quadrature samples of said received return signals of sequences of said transmitted pulses in accordance with said stored weighting coefficients; and
synchronizing (28) the application of said weighting coefficients for filtering (24) the quadrature samples in accordance with the pulse repetition frequency (PRF) of the corresponding transmitted pulses, characterised by the step of determining (32,31) during a test mode of the radar system weighting coefficients (Wᵢ) corrected for pulse stagger amplitude and phase errors on said transmitted pulses, the corrected weighting coefficients (Wᵢ) being calculated in accordance with the formula Wᵢ=Dᵢ^{x} (T₁/Tᵢ), where Dᵢ are uncorrected complex filter coefficients, T₁ is the first complex transmitter output pulse sample in a group of pulses to which the coefficients Dᵢ apply, and Tᵢ is the i^{th} complex transmitter output pulse sample in the group, and in that the said storing of weighting coefficients comprises storing (26) the corrected weighting coefficients (wᵢ), said step of determining the corrected weighting coefficients (Wᵢ) comprising the steps of:
switching (32) to a test mode;
sampling said transmitted pulses and coupling (15,17,19,20) said sampled transmitted pulses to receiving means (21,22) when said radar system is in said test mode; and
calculating (31) corrected weighting coefficients based on quadrature samples from said receiving means (21,22) of said sampled transmitted pulses and uncorrected coefficient inputs (Di) when said radar system is in said test mode.

6. A method according to claim 5, characterised in that said method further comprises the step of transmitting pulses comprising a plurality of stagger blocks wherein said interpulse periods are equal within each of said blocks of said transmitted pulses, and said interpulse period may be the same or vary for each one of said blocks.

7. A method according to claim 6, characterised in that said step of calculating corrected weighting coefficients for return signal processing is performed for each of said blocks.

8. A method according to claim 5, characterised in that said method further comprises the step of transmitting stagger pulses with said staggered PRF having a varying interpulse period from pulse to pulse.

9. A method according to claim 8, characterised in that said step of calculating corrected weighting coefficients for return signal processing is performed for each predetermined batch of said staggered pulse return signals.

## Patentansprüche

1. Radarsystem zur Anzeige bewegter Ziele, mit:
Einrichtungen (12, 14, 28) zum Senden von Impulsen mit gestaffelter Impulswiederholungsfrequenz (PRF);
Einrichtungen (21) zum Empfang von Echosignalen von diesen gesendeten Impulsen; und
einem Bewegtzieldetektor (23) der folgendes aufweist:
Filtermittel (24), welche mit den Empfängereinrichtungen (21) gekoppelt sind, um Quadraturtastungen von den empfangenen Echosignalen von Folgen der gesendeten Impulse entsprechend Gewichtungskoeffizienten zu filtern;
Mittel (26) zur Speicherung (23) von Gewichtungskoeffizienten und zur Lieferung der Gewichtungskoeffizienten an die Filtermittel (24); und
Einrichtungen (28), welche mit den Speichermitteln (26) und den Sendeeinrichtungen (12, 14) gekoppelt sind, um die Lieferung von Gewichtungskoeffizienten für die Filtermittel (24) mit den gesendeten Impulsen entsprechend der Impulswiederholungsfrequenz zu synchronisieren,
*gekennzeichnet durch*
Einrichtungen (31), welche in einem Testbetrieb des Systems wirksam sind, um Gewichtungskoeffizienten (Wᵢ) entsprechend der Formel${\text{W}}_{\text{i}} {\text{=D}}_{\text{i}} {}^{\text{x}} {\text{(T}}_{\text{1}} {\text{/T}}_{\text{i}} \text{)}$
zu errechnen, worin Dᵢ die unkorrigierten komplexen Filterkoeffizienten sind, T₁ die erste komplexe Senderausgangsimpulstastung in einer Gruppe von Impulsen ist, auf welche die Koeffizienten Dᵢ angewendet werden, und Tᵢ die i-te komplexe Senderausgangsimpulstastung in der Gruppe ist, wobei die Gewichtungskoeffizienten (Wᵢ) bezüglich der Impulsstaffelungsamplitude und der Phasenfehler an den gesendeten Impulsen korrigiert sind und die Mittel (31) die korrigierten Gewichtungskoeffizienten (Wᵢ) an die Speichermittel (26) zur Speicherung darin liefern, und
Betriebsmodus-Steuermittel (32) zur Bestimmung, ob das System sich in dem Testbetriebsmodus oder in dem Arbeitsbetriebsmodus befindet, wobei die Betriebsweisen-Steuermittel (32) Einrichtungen (15, 17, 19, 20) zur Tastung der gesendeten Impulse und zur Ankopplung der getasteten gesendeten Impulse an die Empfängereinrichtungen (21) enthalten, wenn sich das Radarsystem in dem Testbetriebsmodus befindet; und
Einrichtungen (22), welche zur Lieferung eines Quadraturausgangs von den Empfängereinrichtungen (21) an die Recheneinrichtungen (31) vorgesehen sind, welche so ausgebildet sind, daß sie die genannten korrigierten Gewichtungskoeffizienten auf der Basis der Quadraturtastung der getasteten Sende impulse und der unkorrigierten Gewichtungskoeffizienteneingänge (Dᵢ) zu den Recheneinrichtungen (31) in dem Testmodus berechnen.

2. Radarsystem nach Anspruch 1, dadurch gekennzeichnet, daß die Betriebmodus-Steuermittel (32) folgendes enthalten:
Mittel (15), welche so ausgebildet sind, daß sie die genannten Impulse von den Sendeeinrichtungen (12, 14) an Verzögerungs- und Dämpfungseinrichtungen (17, 19) ankoppeln, wenn der Testbetriebsmodus eingestellt ist, wobei die Verzögerungs- und Dämpfungseinrichtungen (17, 19) dann Signale mit den Eigenschaften der Echosignale an die Empfangseinrichtungen (21) liefern.

3. Radarsystem nach Anspruch 1 oder 2, dadurch gekennzeichnet, daß die Sendeeinrichtungen (12, 14, 28) so ausgebildet sind, daß sie eine Mehrzahl gestaffelter Impulsblöcke aussenden, wobei die Impulspausen in jedem der Blöcke der ausgesendeten Impulse gleich sind und die Impulspause für jeden der Blöcke gleich oder veränderlich sein kann.

4. Radarsystem nach Anspruch 1 oder 2, dadurch gekennzeichnet, daß die Sendeeinrichtungen (12, 14, 28) so ausgebildet sind, daß sie Impulse mit gestaffelter Pulswiederholungsfrequenz bei veränderlicher Impulspause von Impuls zu Impuls aussenden.

5. Verfahren zum Betrieb eines Radarsystems zur Anzeige bewegter Ziele mit einem Bewegtzieldetektor, gekennzeichnet durch folgende Schritte:
Speichern (26) von Gewichtungskoeffizienten in dem Bewegtzieldetektor (23);
Aussenden (12, 14, 28) von Impulsen mit gestaffelter Impulswiederholungsfrequenz (PRF);
Empfangen (21) von Echosignalen der ausgesendeten Impulse;
Filtern (24) von Quadraturtastungen der empfangenen Echosignale von Folgen der ausgesendeten Impulse entsprechend gespeicherten Gewichtungskoeffizienten; und
Synchronisieren (28) des Anwendens der Gewichtungskoeffizienten für die Filterung (24) der Quadraturtastungen entsprechend der Impulswiederholungsfrequenz (PRF) der entsprechenden gesendeten Impulse,
gekennzeichnet durch den Verfahrensschritt der während eines Testbetriebsmodus des Radarsystems erfolgenden Bestimmung (32, 31) von Gewichtungskoeffizienten (Wᵢ), welche bezüglich Impulsstaffelungsamplitude und Phasenfehlern an den gesendeten Impulsen korrigiert sind, wobei die korrigierten Gewichtungskoeffizienten (Wᵢ) entsprechend der Formel${\text{W}}_{\text{i}} {\text{=D}}_{\text{i}} {}^{\text{x}} {\text{(T}}_{\text{1}} {\text{/T}}_{\text{i}} \text{)}$
errechnet werden, worin Dᵢ die unkorrigierten komplexen Filterkoeffizienten sind, T₁ die ersten komplexe Senderausgangsimpulstastung in einer Gruppe von Impulsen ist, auf welche die Koeffizienten Dᵢ angewendet werden, und Tᵢ die i-te komplexe Senderausgangsimpulstastung in der Gruppe ist;
und dadurch gekennzeichnet, daß die Speicherung der Gewichtungskoeffizienten das Speichern (26) der korrigierten Gewichtungskoeffizienten (Wᵢ) umfaßt, wobei der Schritt der Bestimmung der korrigierten Gewichtungskoeffizienten (Wᵢ) folgende Schritte aufweist:
Umschalten (32) auf den Testbetriebsmodus;
Tastung der gesendeten Impulse und Ankopplung (15, 17, 19, 20) der getasteten gesendeten Impulse an die Empfangseinrichtungen (21, 22), wenn sich das Radarsystem in dem Testbetriebsmodus befindet; und
Errechnen (31) der korrigierten Gewichtungskoeffizienten basierend auf Quadraturtastungen der Empfangseinrichtungen (21, 22) von den getasteten gesendeten Impulsen und den unkorrigierten Koeffzienteneingängen (Dᵢ), wenn sich das Radarsystem in dem Testbetriebsmodus befindet.

6. Verfahren nach Anspruch 5, dadurch gekennzeichnet, daß es weiter den Schritt des Sendens von Impulsen in Gestalt einer Mehrzahl von gestaffelten Impulsblöcken umfaßt, wobei die Impulspausen innerhalb jedes Blockes der gesendeten Impulse gleich sind und die Impulspause für jeden der Blöcke gleich oder veränderlich sein kann.

7. Verfahren nach Anspruch 6, dadurch gekennzeichnet, daß der Schritt des Errechnens der korrigierten Gewichtungskoeffizienten für die Verarbeitung des Echosignals für jeden der genannten Blöcke durchgeführt wird.

8. Verfahren nach Anspruch 5, dadurch gekennzeichnet, daß es weiter den Schritt des Aussendens gestaffelter Impulse umfaßt, wobei die gestaffelte Impulswiederholungsfrequenz in einer veränderlichen Impulspause von Impuls zu Impuls resultiert.

9. Verfahren nach Anspruch 8, dadurch gekennzeichnet, daß der Schritt des Errechnens der korrigierten Gewichtungskoeffizienten für die Echosignalverarbeitung für jede vorbestimmte Gruppe der gestaffelten Impulsechosignale durchgeführt wird.

## Revendications

1. Système radar d'indication de cibles mobiles, comprenant
des moyens (12,14,28) pour transmettre des impulsions ayant une fréquence échelonnée de répétition (PRF);
des moyens (21) pour recevoir les signaux de retour à partir desdites impulsions émises; et
un détecteur de cibles mobiles (23) comportant :
des moyens de filtre (24) couplés auxdits moyens de réception (21) pour filtrer des échantillons en quadrature desdits signaux de retour reçus de séquences desdites impulsions émises en fonction de coefficients de pondération;
des moyens (26) pour mémoriser (23) des coefficients de pondération et envoyer les coefficients de pondération aux moyens de filtre (24);
des moyens (28) couplés auxdits moyens de mémoire (26) et auxdits moyens d'émission (12,14) pour synchroniser l'envoi de coefficients de pondération pour lesdits moyens de filtre (24) auxdites impulsions émises en fonction de la fréquence de répétition d'impulsions;
caractérisé par des moyens (31) pouvant fonctionner dans un mode de test du système pour effectuer un calcul conformément à la formule Wᵢ=Dᵢ^{x} (T₁/Tᵢ), Dᵢ désignant des coefficients complexes non corrigés du filtre, T₁ la première impulsion échantillon de sortie complexe de l'émetteur dans un groupe d'impulsions auquel les coefficients Dᵢ s'appliquent, et Tᵢ la i-ème impulsion échantillon de sortie complexe de l'émetteur dans le groupe, pondérer des coefficients (Wᵢ) corrigés en tenant compte des erreurs d'amplitude et de phase des impulsions présentes dans lesdits impulsions émises et envoyer les coefficients de pondération corrigés (Wᵢ) aux moyens de mémoire (26) pour leur mémorisation dans ces derniers, et des moyens de commande de mode (32) pour déterminer si le système se situe dans le mode de test ou dans un mode de fonctionnement, les moyens de commande de mode (32) comprenant des moyens (15,17,19,20) pour échantillonner lesdites impulsions émises et envoyer lesdites impulsions émises échantillonnées aux moyens de réception (21) lorsque le système radar est dans le mode de test; et
des moyens (22) étant prévus pour envoyer un signal de sortie en quadrature provenant des moyens de réception (21) aux moyens de calcul (31), les moyens de calcul (31) étant à même de calculer ledit coefficient de pondération corrigé sur la base d'échantillons en quadrature des impulsions échantillonnées émises et d'entrées de coefficients de pondération (Dᵢ) non corrigés aux moyens de calcul (31) dans le mode de test.

2. Système radar selon la revendication 1, caractérisé en ce que les moyens de commande de mode (32) comprennent :
des moyens (15) agencés de manière à appliquer lesdites impulsions provenant desdits moyens d'émission (12,14) à des moyens de retardement et d'atténuation (17,19), lorsqu'ils sont positionnés dans ledit mode de test, les moyens de raccordement et d'atténuation (17,19) délivrant alors aux moyens de réception (21) des signaux ayant des caractéristiques desdits signaux de retour.

3. Système radar selon la revendication 1 ou 2, caractérisé en ce que lesdits moyens d'emission (12,14,28) sont tels qu'ils transmettent une pluralité de blocs d'échelonnement, dans lesquels lesdites périodes entre impulsions sont égales dans chacun desdits blocs desdites impulsions transmises et une période entre impulsions peut être identique ou variable pour chacun desdits blocs.

4. Système radar selon la revendication 1 ou 2, caractérisé en ce que lesdits moyens d'émission (12,14,28) sont tels qu'ils transmettent des impulsions ayant une fréquence de répétition d'impulsions PRF échelonnée, ayant une période variable entre impulsions.

5. Procédé pour faire fonctionner un système radar d'indication de cibles mobiles comportant un détecteur de cibles mobiles, comprenant les étapes consistant à :
mémoriser (26) des coefficients de pondération dans ledit détecteur de cibles mobiles (23);
émettre (12,14,28) des impulsions avec une fréquence de répétition d'impulsions (PRF) échelonnée;
recevoir (21) des signaux de retour à partir desdites impulsions émises;
filtrer (24) des échantillons en quadrature desdits signaux de retour reçus de séquences desdites impulsions transmises en fonction desdits coefficients de pondération mémorisés; et
synchroniser (28) l'application desdits coefficients de pondération pour le filtrage (24) des échantillons en quadrature conformément à la fréquence (PRF) de répétition des impulsions transmises correspondantes;
caractérisé par l'étape consistant à déterminer (32,31), pendant un mode de test du système radar, des coefficients de pondération (Wᵢ) corrigés pour tenir compte des erreurs d'amplitude et de phase d'échelonnement des impulsions émises, les coefficients de pondération corrigés (Wᵢ) étant calculés conformément à la formule Wᵢ=Dᵢ^{x} (T₁/Tᵢ), dans laquelle Dᵢ désigne des coefficients de filtre complexes non corrigés, T₁ désigne la première impulsion échantillon de sortie complexe de l'émetteur dans un groupe d'impulsions auquel les coefficients Dᵢ s'appliquent, et Tᵢ est la i-ème impulsion échantillon de sortie complexe de l'émetteur dans le groupe, et en ce que ladite mémorisation de coefficients de pondération comprend la mémorisation (26) des coefficients de pondération corrigés (Wᵢ), ladite étape de détermination des coefficients de pondération corrigés (Wᵢ) comprenant les étapes consistant à :
passer (32) à un mode de test;
échantillonner lesdites impulsions émises et transmettre (15,17,19,20) lesdites impulsions émises échantillonnées à des moyens de réception (21,22) lorsque ledit système radar est dans le mode de test; et
calculer (31) les coefficients de pondération corrigés sur la base d'échantillons en quadrature délivrés par lesdits moyens de réception (21,22) desdites impulsions transmises échantillonnées et sur des entrées de coefficients non corrigés (Dᵢ) lorsque ledit système radar est dans ledit mode de test.

6. Procédé selon la revendication 5, caractérisé en ce que ledit procédé comporte en outre l'étape consistant à émettre des impulsions comprenant une pluralité de blocs d'échelonnement, dans lequel lesdites périodes entre impulsions sont égales à l'intérieur de chacun desdits blocs desdites impulsions transmises, et ladite période entre impulsions peut être identique ou varier pour chacun desdits blocs.

7. Procédé selon la revendication 6, caractérisé en ce que ladite étape de calcul de coefficients de pondération corrigés pour le traitement des signaux de retour est exécutéepour chacun desdits blocs.

8. Procédé selon la revendication 5, caractérisé en ce que ledit procédé comporte en outre une étape consistant à transmettre des impulsions d'échelonnement, avec ladite fréquence PRF échelonnée et présentant une période variable entre impulsions.

9. Procédé selon la revendication 8, caractérisé en ce que ladite étape de calcul de coefficients de pondération corrigés pour le traitement de signaux de retour est exécutée pour chaque lot prédéterminé desdits signaux de retour d'impulsions échelonnés.
